Europäisches Patentamt

European Patent Office

Office européen des brevets

(19)

(11) EP 0 703 247 B1

(12) FASCICULE DE BREVET EUROPEEN

(45) Date de publication et mention
de la délivrance du brevet:
**09.12.1998 Bulletin 1998/50**

(51) Int Cl.$^6$: **C08F 10/00**

(21) Numéro de dépôt: **95202495.8**

(22) Date de dépôt: **15.09.1995**

(54) **Procédé de polymérisation d'oléfines**

Verfahren zur Olefinpolymerisation

Process for the polymerization of olefins

(84) Etats contractants désignés:
**AT BE DE ES FR GB IT NL PT SE**

(30) Priorité: **22.09.1994 BE 9400857**

(43) Date de publication de la demande:
**27.03.1996 Bulletin 1996/13**

(73) Titulaire: **SOLVAY POLYOLEFINS EUROPE -
BELGIUM (Société Anonyme)
1050 Bruxelles (BE)**

(72) Inventeur: **Bian, Jiang
B-1200 Bruxelles (BE)**

(74) Mandataire: **Destryker, Elise Martine et al
Solvay Polyolefins Europe-Belgium
(Société Anonyme)
Département de la Propriété Industrielle
310, rue de Ransbeek
1120 Bruxelles (BE)**

(56) Documents cités:
**EP-A- 0 522 423          EP-A- 0 634 426
FR-A- 2 311 032          FR-A- 2 656 313
US-A- 4 804 726**

**Description**

La présente invention concerne un procédé de polymérisation d'oléfines, plus précisément un procédé de polymérisation en présence d'un système catalytique comprenant un complexe catalytique solide à base de magnésium, de métal de transition et d'halogène, et un composé organométallique (cocatalyseur).

Le brevet britannique GB 1464909 divulgue des systèmes catalytiques comprenant un solide à base de magnésium, de métal de transition et d'halogène, et un cocatalyseur. Dans l'exemple 1 de ce brevet, on polymérise l'éthylène en présence de triisobutylaluminium (cocatalyseur) et d'un solide catalytique obtenu en mélangeant de l'éthylate de magnésium avec du tétrabenzyltitane et en y ajoutant du dichlorure d'éthylaluminium jusqu'à l'obtention d'un précipité solide.

Le polyéthylène obtenu en présence de ce solide catalytique connu présente une teneur élevée en oligomères (polymères de faible masse moléculaire comprenant au maximum 15 unités monomériques) qui sont responsables, lors de la mise en oeuvre ultérieure du polyéthylène, par exemple dans un procédé de soufflage de flacons, d'une émission de fumées. Par ailleurs, les oligomères dégradent les propriétés mécaniques et rhéologiques des polyoléfines.

L'invention vise à remédier à cet inconvénient en fournissant un procédé nouveau pour la fabrication de polyoléfines présentant notamment une faible teneur en oligomères et des propriétés mécaniques et rhéologiques améliorées.

A cet effet, l'invention concerne un procédé de fabrication de polymères d'éthylène contenant au moins 90% molaires d'éthylène selon lequel on met en contact l'éthylène et éventuellement une autre oléfine avec un système catalytique comprenant :

a) un complexe catalytique solide à base de magnésium, de métal de transition et d'halogène, ledit complexe catalytique étant préparé en faisant réagir, dans une première étape, au moins un composé de magnésium choisi parmi les composés oxygénés organiques et les composés halogénés du magnésium avec au moins un composé d'un métal de transition du groupe IVB ou VB du tableau périodique choisi parmi les composés oxygénés organiques et les composés halogénés d'un métal de transition en l'absence d'un donneur d'électrons, jusqu'à l'obtention d'un complexe liquide, et, dans une étape ultérieure, en précipitant ledit complexe liquide au moyen d'un composé organoaluminique halogéné de formule générale $AlR_nX_{3-n}$ dans laquelle R est un radical hydrocarboné, X est un halogène et n est inférieur à 3 pour recueillir un complexe catalytique solide, et

b) un composé organométallique d'un métal des groupes IA, IIA, IIB, IIIA et IVA du tableau périodique ;

selon l'invention, le système catalytique comprend en outre :

c) au moins un donneur d'électrons mis en oeuvre après la première étape de la préparation du complexe catalytique solide conduisant à l'obtention d'un complexe liquide.

Une des caractéristiques essentielles de l'invention réside dans la mise en oeuvre d'un donneur d'électrons dans une étape postérieure à la première étape de la préparation du complexe catalytique solide conduisant à l'obtention d'un complexe liquide. La demanderesse a en effet constaté que la mise en oeuvre d'un donneur d'électrons pendant la première étape de préparation d'un complexe liquide conduit à des catalyseurs produisant des polymères de faible poids spécifique apparent, ce qui se traduit dans une faible productivité. Le donneur d'électrons peut donc être mis en oeuvre soit au sein de la préparation du complexe catalytique solide (en même temps que l'étape ultérieure ou dans une étape supplémentaire) soit au stade de la polymérisation en même temps que le complexe catalytique solide et le composé organométallique.

Le complexe catalytique solide mis en oeuvre dans le procédé selon l'invention est de préférence non prépolymérisé.

Dans une première variante du procédé selon l'invention, le donneur d'électrons est mis en oeuvre pendant la préparation du complexe catalytique solide immédiatement après la première étape, c'est-à-dire après la formation du complexe liquide, et avant l'étape de précipitation. Le traitement au moyen du donneur d'électrons peut être réalisé par tout moyen connu adéquat. Le donneur d'électrons peut être ajouté à l'état pur au complexe liquide ou sous la forme d'une solution dans un solvant tel que les hydrocarbures aliphatiques, cycloaliphatiques et aromatiques liquides. Les solvants préférés sont les hydrocarbures contenant jusqu'à 20 atomes de carbone, et en particulier les alcanes linéaires (tels que le n-butane, le n-hexane et le n-heptane) ou les alcanes ramifiés (tels que l'isobutane, l'isopentane, l'isooctane) ou les cycloalcanes (tels que le cyclopentane et le cyclohexane). On obtient de bons résultats avec les alcanes linéaires. L'hexane est préféré.

La température à laquelle le traitement au moyen du donneur d'électrons est effectué dans la première variante est en général inférieure aux températures de décomposition du donneur d'électrons et du complexe liquide. Elle est en particulier d'au moins -20 °C, plus précisément d'au moins 0 °C, les valeurs d'au moins 20 °C étant les plus courantes. La température est habituellement d'au plus 150 °C, plus particulièrement d'au plus 120 °C, les températures d'au plus 100 °C étant recommandées, par exemple d'au plus 70 °C.

La durée du traitement au moyen du donneur d'électrons dans la première variante est couramment de 0,5 minute à 5 heures, de préférence de 1 minute à 2 heures, par exemple de 5 minutes à 1 heure. La pression sous laquelle le traitement est réalisé n'est pas critique, on opère de préférence sous pression atmosphérique.

La quantité de donneur d'électrons mise en oeuvre dans la première variante est habituellement d'au moins 0,01 mole par mole de métal de transition mise en oeuvre, plus précisément d'au moins 0,02 mole, les valeurs d'au moins 0,05 mole étant les plus avantageuses. La quantité de donneur d'électrons mise en oeuvre ne dépasse pas le plus souvent 50 moles par mole de métal de transition mise en oeuvre, de préférence pas 30 moles, les valeurs d'au plus 20 moles étant les plus recommandées. Les quantités de 0,2 à 12 moles conviennent particulièrement bien.

La première variante permet non seulement de réduire la teneur en oligomères des polyoléfines obtenues, mais aussi d'augmenter l'activité du complexe catalytique solide en polymérisation, et d'augmenter le poids spécifique apparent des polyoléfines obtenues. En outre, le complexe catalytique solide obtenu selon la première variante est plus sensible aux régulateurs de la masse moléculaire des polyoléfines de sorte qu'il nécessite moins de régulateur de la masse moléculaire (par exemple de l'hydrogène) pour obtenir une masse moléculaire donnée. La première variante permet également de moduler la morphologie du complexe catalytique solide et dès lors la morphologie des polyoléfines obtenues à partir de ce complexe catalytique solide. Elle permet en particulier de diminuer la largeur de la distribution granulométrique du complexe catalytique solide.

Dans une deuxième variante du procédé selon l'invention, le donneur d'électrons est mis en oeuvre pendant la préparation du complexe catalytique solide après l'étape de précipitation du complexe liquide, et de préférence après d'éventuelles étapes intermédiaires de mûrissage et de lavage du précipité (qui sont décrites plus loin), mais avant de mettre le complexe catalytique solide en contact avec l'oléfine en vue de sa polymérisation. A cet effet, le donneur d'électrons peut être ajouté, à l'état pur ou sous la forme d'une solution dans un solvant tel que décrit ci-dessus, à une suspension du complexe catalytique solide dans un diluant inerte. Ce diluant inerte peut par exemple être choisi parmi les hydrocarbures aliphatiques et cycloaliphatiques. Les alcanes linéaires ou ramifiés ou les cycloalcanes contenant judsqu'à 20 atomes de carbone conviennent bien. L'hexane convient particulièrement bien.

La température, la durée, la pression et la quantité de donneur d'électrons mise en oeuvre dans le traitement au moyen du donneur d'électrons selon la deuxième variante sont conformes à celles de la première variante décrites ci-dessus.

La deuxième variante permet non seulement de réduire la teneur en oligomères des polyéthylènes obtenues, mais elle permet aussi de moduler la réponse du complexe catalytique solide aux régulateurs de la masse moléculaire des polyoléfines (par exemple l'hydrogène) par la variation de la quantité de donneur d'électrons mise en oeuvre. On a en effet constaté que plus la quantité de donneur d'électrons mise en oeuvre est augmentée, plus la réponse du complexe catalytique solide au régulateur est prononcée. Il en résulte ainsi qu'une très large gamme de polyoléfines présentant des masses moléculaires fortement différentes, et donc des indices de fluidité fortement différents, peut être obtenue.

Une troisième variante du procédé selon l'invention consiste à mettre en oeuvre le donneur d'électrons pendant la polymérisation et non plus pendant la préparation du complexe catalytique solide. Elle s'avère particulièrement performante lorsque la polymérisation est effectuée en phase gazeuse. Dans cette troisième variante, le donneur d'électrons peut être introduit séparément dans le milieu de polymérisation à n'importe quel moment, de préférence au début de la polymérisation. Dans une forme d'exécution particulièrement avantageuse de cette troisième variante, le donneur d'électrons est introduit dans le milieu de polymérisation mélangé avec le composé organométallique, le mélange étant préparé au préalable. Ce mélange peut être obtenu par simple mise en contact du donneur d'électrons avec le composé organométallique ou en ajoutant le donneur d'électrons, de préférence progressivement, à une solution du composé organométallique ou encore en ajoutant une solution du donneur d'électrons à une solution du composé organométallique. On préfère ajouter le donneur d'électrons à l'état pur à une solution du composé organométallique dans un solvant tel que défini plus haut pour les deux autres variantes.

La quantité de donneur d'électrons mise en oeuvre dans la troisième variante est habituellement telle que le rapport molaire de la quantité mise en oeuvre du composé organométallique à la quantité mise en oeuvre du donneur d'électrons soit d'au moins 0,01, plus précisément d'au moins 0,05, les valeurs d'au moins 0,2 étant les plus avantageuses. Le rapport de ces quantités ne dépasse pas le plus souvent 100, de préférence pas 80, les valeurs d'au plus 60 étant les plus recommandées.

La troisième variante présente l'avantage non seulement de réduire la teneur en oligomères des polyoléfines obtenues mais aussi d'augmenter l'activité du complexe catalytique solide en polymérisation. Elle s'avère particulièrement avantageuse dans un procédé de polymérisation en phase gazeuse qui est caractérisé en général par une capacité limitée de transfert de chaleur, car le profil cinétique du complexe catalytique solide présente une période d'induction prononcée.

Par donneur d'électrons on entend désigner aux fins de la présente invention les composés organiques contenant un ou plusieurs atomes ou un ou plusieurs groupements d'atomes ayant une ou plusieurs paires d'électrons libres tels que par exemple l'oxygène, l'azote, le soufre ou des groupements comprenant un de ces éléments. Le donneur d'électrons est choisi parmi les composés organiques contenant un ou plusieurs atomes ou un ou plusieurs groupements d'atomes ayant une ou plusieurs paires d'électrons libres à l'exclusion des alcools, phénols, silanes et polysiloxanes. Des exemples de donneurs d'électrons qui peuvent être utilisés dans le procédé selon l'invention sont les éthers, les cétones, les aldéhydes, les acides organiques, les esters d'acides organiques, les halogénures d'acides organiques, les amides d'acides organiques, les amines et les nitriles.

On peut citer à titre d'exemples d'éthers, ceux comprenant de 2 à 20 atomes de carbone, tels que l'éther isoamylique. Les cétones généralement utilisables sont celles contenant de 3 à 18 atomes de carbone telles que la méthyléthylcétone et l'acétophénone. Les aldéhydes couramment utilisés sont ceux contenant de 2 à 15 atomes de carbone tels que l'octylaldéhyde et le benzaldéhyde. Des exemples d'acides organiques sont ceux contenant jusqu'à 24 atomes de carbone tels que l'acide butyrique et l'acide anisique. Comme esters d'acides organiques on peut utiliser par exemple ceux contenant de 2 à 30 atomes de carbone tels que l'acétate de méthyle, le propionate d'éthyle, le butyrate de méthyle, le méthacrylate de propyle, le benzoate d'éthyle, le benzoate de phényle, l'o-méthoxybenzoate d'éthyle, le p-toluate de méthyle, le salicylate de méthyle, le naphtoate d'éthyle, le phtalate et l'anisate d'éthyle ou de butyle. Le benzoate d'éthyle, le 3,5-bis(1,1-diméthyléthyl)-4-hydroxy- benzènepropanoate d'octadécyle et le phtalate de dibutyle conviennent particulièrement bien. On peut citer à titre d'exemples d'halogénures d'acides organiques ceux contenant de 2 à 15 atomes de carbone tels que le chlorure d'acétyle et le chlorure de toluoyle. Comme amides d'acides on peut citer par exemple l'acétamide, le benzamide et le toluamide. Les amines utilisables sont par exemple la diéthylamine, la pipéridine, la tribenzylamine, l'aniline et la pyridine. Comme nitriles, on peut utiliser par exemple l'acétonitrile et le benzonitrile. Les éthers et les esters d'acides organiques conviennent bien. Les esters d'acides organiques sont préférés, en particulier le benzoate d'éthyle et le phtalate de dibutyle et plus particulièrement encore le benzoate d'éthyle.

L'obtention du complexe catalytique solide mis en oeuvre dans le procédé de polymérisation selon l'invention est réalisée moyennant au moins deux étapes distinctes et successives, à savoir une première étape de formation d'un complexe liquide et une étape ultérieure de précipitation connues en tant que telles.

La première étape de la préparation du complexe catalytique solide réside dans la préparation d'un complexe liquide par la réaction du composé de magnésium avec le composé d'un métal de transition. On peut bien entendu mettre en oeuvre simultanément plusieurs composés de magnésium différents. De même, on peut aussi mettre en oeuvre simultanément plusieurs composés différents d'un métal de transition ou plusieurs composés dont le métal de transition est différent. La réaction de la première étape peut être réalisée par toute méthode connue adéquate pourvu qu'elle permette l'obtention d'un complexe à l'état liquide. Lorsque le composé de magnésium et/ou le composé d'un métal de transition sont liquides dans les conditions opératoires de la réaction, il est souhaitable d'opérer la réaction par simple mélange de ces réactifs en l'absence de solvant ou de diluant. Toutefois, on peut opérer la réaction en présence d'un diluant lorsque la quantité de liquide présente dans le milieu de réaction n'est pas suffisante pour que la réaction soit complète ou lorsque les deux réactifs sont solides dans les conditions opératoires de la réaction. Le diluant est généralement choisi parmi ceux qui sont capables de dissoudre au moins un des réactifs et en particulier parmi les solvants décrits plus haut.

La quantité mise en oeuvre du composé d'un métal de transition est définie par rapport à la quantité mise en oeuvre du composé de magnésium. Elle peut varier dans une large mesure. En général, elle est d'au moins 0,01 mole de métal de transition présent dans le composé de métal de transition par mole de magnésium présent dans le composé de magnésium, en particulier d'au moins 0,02 mole, les valeurs d'au moins 0,05 étant les préférées. La quantité est habituellement d'au plus 20 moles de métal de transition présent dans le composé d'un métal de transition par mole de magnésium présent dans le composé de magnésium, plus précisément d'au plus 10 moles, les valeurs d'au plus 5 moles étant recommandées.

La température à laquelle on met en présence le composé de magnésium et le composé d'un métal de transition dans la première étape de la préparation du complexe catalytique solide dépend de la nature des réactifs et est de préférence inférieure à la température de décomposition des réactifs et du complexe liquide obtenu à la suite de la réaction. Elle est généralement d'au moins -20 °C, en particulier d'au moins 0 °C, les températures d'au moins 20 °C étant les plus courantes. La température est habituellement d'au plus 200 °C, plus spécialement d'au plus 180 °C, les températures d'au plus 150 °C étant avantageuses, par exemple d'environ 140 °C.

La durée de la première étape de la préparation du complexe catalytique solide dépend de la nature des réactifs et des conditions opératoires et est avantageusement suffisamment longue pour obtenir une réaction complète entre les réactifs. La durée peut varier généralement de 10 minutes à 20 heures, plus précisément de 2 à 15 heures, par exemple de 4 à 10 heures.

La pression sous laquelle on effectue la réaction de la première étape et la vitesse d'addition des réactifs ne sont pas des facteurs critiques. Pour des raisons de commodité, on travaille généralement sous pression atmosphérique; la vitesse d'addition est choisie en général de manière à ne pas provoquer un échauffement brusque du milieu réactionnel dû à une auto-accélération éventuelle de la réaction. On agite généralement le milieu réactionnel de manière à favoriser son homogénéisation pendant la durée de la réaction. La réaction peut être réalisée en continu ou en discontinu.

A l'issue de la première étape de la préparation du complexe catalytique solide, on recueille un complexe liquide du composé de magnésium et du composé d'un métal de transition, que l'on peut mettre en oeuvre tel quel dans l'étape subséquente, ou que l'on peut éventuellement stocker dans un diluant, de préférence inerte, afin de le récupérer intact ultérieurement et de le mettre en oeuvre en présence du diluant. Le diluant est le plus souvent choisi parmi les hydrocarbures aliphatiques ou cycloaliphatiques, de préférence contenant jusqu'à 20 atomes de carbone tels que par exemple les alcanes comme l'isobutane, le pentane, l'hexane, l'heptane ou le cyclohexane ou leurs mélanges. L'hexane convient particulièrement bien.

Le composé de magnésium est choisi parmi les composés oxygénés organiques et les composés halogénés du magnésium.

Par composé oxygéné organique de magnésium, on entend désigner tous les composés où un radical organique est lié au magnésium par l'intermédiaire de l'oxygène, c'est-à-dire tous les composés comprenant au moins une séquence de liaisons magnésium-oxygène-radical organique par atome de magnésium. Les radicaux organiques liés au magnésium par l'intermédiaire de l'oxygène sont choisis en général parmi les radicaux comprenant jusqu'à 20 atomes de carbone et, plus particulièrement, parmi ceux comprenant jusqu'à 10 atomes de carbone. De bons résultats sont obtenus lorsque ces radicaux comprennent de 2 à 6 atomes de carbone. Ces radicaux peuvent être saturés ou insaturés, à chaîne ramifiée, à chaîne droite ou cyclique. Ils sont choisis de préférence parmi les radicaux hydrocarbonés et en particulier parmi les radicaux alkyles (linéaires ou branchés), alkényles, aryles, cycloalkyles, arylalkyles, alkylaryles, acyles et leurs dérivés substitués.

Les composés oxygénés organiques de magnésium peuvent comporter, en plus des radicaux organiques liés au magnésium par l'intermédiaire de l'oxygène, d'autres radicaux. Ces autres radicaux sont de préférence les radicaux -OH, -$(SO_4)_{1/2}$, -$NO_3$, -$(PO_4)_{1/3}$, -$(CO_3)_{1/2}$ et -$ClO_4$. Il peut s'agir également de radicaux organiques liés directement au magnésium par le carbone.

Parmi les composés oxygénés organiques de magnésium utilisables, on peut citer les alkoxydes (tels que l'éthylate et le cyclohexanolate), les alkylalkoxydes (tels que l'éthyléthylate), les hydroxyalkoxydes (tels que l'hydroxyméthylate), les phénoxydes (tels que le naphténate),les carboxylates éventuellement hydratés (tels que l'acétate, et le benzoate). Il peut également s'agir des composés oxygénés azotés organiques, c'est-à-dire des composés comprenant des séquences de liaisons magnésium-oxygène-azote-radical organique (tels que les oximates, en particulier le butyloximate, les sels d'acides hydroxylamines, en particulier le dérivé de la N-nitroso-N-phényl-hydroxylamine), des chélates, c'est-à-dire les composés oxygénés organiques dans lesquels le magnésium possède au moins une séquence de liaisons normales du type magnésium-oxygène-radical organique et au moins une liaison de coordination de manière à former un hétérocycle dans lequel le magnésium est inclus (tels que les énolates, en particulier l'acétylacétonate), des silanolates, c'est-à-dire des composés comprenant des séquences de liaisons magnésium-oxygène-silicium-radical hydrocarboné (tels que le triphénylsilanolate). On peut également citer à titre d'exemples de composés oxygénés organiques de magnésium ceux comprenant plusieurs radicaux organiques différents (tels que le méthoxyéthylate de magnésium), les alkoxydes et phénoxydes complexes du magnésium et d'un autre métal (tels que $Mg[Al(OR)_4]_2$) et les mélanges de deux ou de plusieurs des composés oxygénés organiques de magnésium définis ci-dessus.

Par composé halogéné de magnésium, on entend désigner tous les composés comprenant au moins une liaison magnésium-halogène. L'halogène peut être le fluor, le chlore, le brome ou l'iode. De préférence, l'halogène est le chlore.

Parmi les composés halogénés de magnésium, on peut citer les dihalogénures, de préférence contenant au maximum une molécule d'eau par molécule de dihalogénure, les dihalogénures complexés (tels que le $MgCl_2.6NH_3$ ou $MgCl_2.6CH_3OH$), les composés comprenant, outre la liaison magnésium-halogène, un radical organique, lié au magnésium par l'intermédiaire de l'oxygène (tels que le $Mg(OH)Cl$ ou $Mg(O-CN_3)Cl$). Il peut également s'agir des composés comprenant, outre la liaison magnésium-halogène, une liaison magnésium-radical organique (tels que $Mg(C_2H_5)Cl$), les produits de l'hydrolyse des halogénures hydratés de magnésium, pour autant que ces produits contiennent encore des liaisons magnésium-halogène, les compositions mixtes comprenant des composés halogénés et oxygénés de magnésium (tels que $MgCl_2.MgO.H_2O$) et les mélanges de deux ou de plusieurs des composés halogénés de magnésium définis ci-dessus.

Parmi tous les composés de magnésium qui conviennent, on utilise de préférence ceux qui ne contiennent par atome de magnésium que des liaisons magnésium-oxygène-radical organique et/ou des liaisons magnésium-halogène à l'exclusion de toute autre liaison. Les meilleurs résultats sont obtenus avec les composés oxygénés organiques, en particulier avec ceux comprenant seulement par atome de magnésium des liaisons magnésium-oxygène-radical organique. Les alkoxydes de magnésium sont particulièrement préférés. Les meilleurs résultats sont obtenus avec les dialkoxydes de magnésium, en particulier le diéthylate de magnésium.

Le composé d'un métal de transition est choisi parmi les composés oxygénés organiques et les composés halogénés du métal de transition.

Par composé oxygéné organique d'un métal de transition, on entend désigner tous les composés où un radical organique est lié au métal de transition par l'intermédiaire de l'oxygène, c'est-à-dire tous les composés comprenant au moins une séquence de liaisons métal de transition-oxygène-radical organique par atome de métal de transition. Les radicaux organiques sont conformes à ceux définis ci-dessus pour les composés oxygénés organiques de magnésium.

Le métal de transition est avantageusement choisi parmi le titane, le zirconium, l'hafnium et le vanadium. Le titane et le zirconium conviennent bien. Le titane est particulièrement préféré. Dans le cas du titane, du zirconium ou de l'hafnium, on utilise de préférence les composés de métal de transition tétravalent parce qu'ils sont plus souvent liquides et en tout cas plus souvent et mieux solubles que ceux où le métal de transition se trouve à une valence inférieure à 4.

Les composés oxygénés organiques de métal de transition utilisables peuvent également comprendre des liaisons métal de transition-oxygène-métal de transition.

On peut représenter les composés oxygénés organiques de métal de transition par la formule générale $MO_x(OR')_{m-2x}$ où M représente le métal de transition de valence m, R' représente un radical organique tel que défini plus haut et x est un nombre tel que $0 \leq x \leq (m-1)/2$. On préfère utiliser les composés où x est tel que $0 \leq x \leq (m-2)/2$.

Il va de soi que les composés oxygénés organiques de métal de transition peuvent comprendre plusieurs radicaux organiques différents.

Parmi les composés oxygénés organiques de métal de transition, on peut citer les alkoxydes (tels que $Ti(O-nC_4H_9)_4$), les phénoxydes (tels que $Zr(OC_6H_5)_4$), les oxyalkoxydes (tels que $HfO(OC_2H_5)_2$), les alkoxydes condensés (tels que $Ti_2O(O-iC_3H_7)_6$), les carboxylates (tels que $Zr(OOCCH_3)_4$) et les énolates (tels que l'acétylacétonate de hafnium).

Par composé halogéné d'un métal de transition, on entend désigner tous les composés comprenant au moins une liaison métal de transition-halogène. L'halogène est conforme à celui défini plus haut pour les composés halogénés de magnésium. On préfère le chlore.

Parmi les composés halogénés d'un métal de transition, on peut citer les halogénures, en particulier les tétrahalogénures (tels que $TiCl_4$), les halogénures complexés (tels que $ZrCl_4.6NH_3$), les halogénures complexes d'un métal de transition et d'un métal alcalin (tels que $Na_2TiCl_6$), les oxyhalogénures (tels que $HfOCl_2$) et les halogénoalkoxydes (tels que $Ti(OC_2H_5)_2Cl_2$ ou $Zr(OiC_3H_7)_3Cl$).

Il va de soi qu'on peut utiliser plusieurs composés de métal de transition simultanément. Lorsque l'on souhaite obtenir une polyoléfine présentant une large distribution des masses moléculaires, il peut s'avérer préférable d'utiliser des composés de différents métaux de transition, en particulier un composé de titane et un composé de zirconium.

Parmi tous les composés d'un métal de transition qui conviennent, on utilise de préférence ceux qui ne contiennent par atome de métal de transition que des liaisons métal de transition-oxygène-radical organique et/ou des liaisons métal de transition-halogène à l'exclusion de toute autre liaison. Les meilleurs résultats sont obtenus avec les composés oxygénés organiques d'un métal de transition, en particulier avec ceux comprenant seulement par atome de métal de transition des liaisons métal de transition-oxygène-radical organique. Les alkoxydes conviennent bien. Les meilleurs résultats sont obtenus avec les tétraalkoxydes du titane ou du zirconium, en particulier le tétrabutylate de titane ou de zirconium.

La préparation du complexe catalytique solide comprend une étape ultérieure, que l'on appelle l'étape de précipitation et qui a pour fonction de réduire la valence du métal de transition et simultanément d'halogéner, le cas échéant, le composé de magnésium et/ou le composé d'un métal de transition, c'est-à-dire de substituer les groupements alkoxy présents dans le composé de magnésium et/ou dans le composé d'un métal de transition par des halogènes, de sorte que le complexe liquide obtenu à l'issue de la première étape soit précipité en un complexe catalytique solide. La réduction et l'éventuelle halogénation sont réalisées simultanément au moyen du composé organoaluminique halogéné agissant donc comme un agent réducto-halogénant provoquant la précipitation d'un complexe catalytique solide.

Le traitement au moyen du composé organoaluminique halogéné dans l'étape de précipitation du complexe catalytique solide peut être effectué par tout moyen connu adéquat, et de préférence en ajoutant progressivement le composé organoaluminique halogéné au complexe liquide issue de la première étape précitée.

La quantité de composé organoaluminique halogéné à mettre en oeuvre dépend des quantités mises en oeuvre du composé de magnésium et du composé d'un métal de transition et est avantageusement suffisante pour obtenir le taux de réduction souhaité et, le cas échéant, le taux d'halogénation voulu. En pratique, on n'a pas intérêt à mettre en oeuvre une quantité supérieure à la quantité minimale nécessaire pour obtenir une réduction et, le cas échant, une halogénation complète car tout excès mis en oeuvre conduit à une augmentation de la teneur en aluminium dans le complexe catalytique solide, ce qui n'est pas souhaitable. En général, la quantité est d'au moins 0,5 mole d'aluminium par mole mise en oeuvre de métal de transition, de préférence d'au moins 1 mole, les valeurs d'au moins 2 moles étant les plus courantes; elle est couramment d'au plus 50 moles d'aluminium par mole mise en oeuvre de métal de transition, en particulier d'au plus 30 moles, les valeurs d'au plus 20 moles étant avantageuses.

La température à laquelle l'étape de précipitation du complexe liquide est réalisée est avantageusement inférieure à la température d'ébullition, sous pression ordinaire, du composé organoaluminique halogéné. Elle est habituellement d'au moins -20 °C, plus particulièrement d'au moins 0 °C, les températures d'au moins 20 °C étant recommandées. La température ne dépasse pas le plus souvent 150 °C, plus spécialement pas 100 °C, les températures d'au plus 80 °C étant les plus courantes.

La durée de l'étape de précipitation du complexe liquide est de préférence suffisante pour obtenir une précipitation complète. Elle peut varier de 1 minute à 10 heures, plus précisément de 10 minutes à 8 heures, par exemple de 0,5 à 5 heures.

La pression sous laquelle on effectue l'étape de précipitation du complexe liquide n'est pas un facteur critique. Pour des raisons de commodité, on travaille généralement sous pression atmosphérique. La vitesse d'addition des réactifs est choisie en général de manière à ne pas provoquer un échauffement brusque du milieu réactionnel dû à une auto-accélération éventuelle de la réaction. On agite généralement le milieu réactionnel de manière à favoriser son homogénéisation pendant la durée de la réaction. La réaction peut être réalisée en continu ou en discontinu.

Le composé organoaluminique halogéné répond avantageusement à la formule $AlR_nX_{3-n}$ dans laquelle R est un radical hydrocarboné comprenant jusqu'à 20 atomes de carbone et de préférence jusqu'à 6 atomes de carbone. On obtient de bons résultats lorsque R est un radical alkyle (linéaire ou branché), cycloalkyle, arylalkyle, aryle et alkylaryle. Les meilleurs résultats sont obtenus lorsque R représente un radical alkyle linéaire ou branché. X est généralement choisi parmi le fluor, le chlore, le brome et l'iode. Le chlore convient particulièrement bien. De préférence n ne dépasse pas 1,5, plus spécialement pas 1. A titre d'exemples de composé organoaluminique halogéné utilisable dans l'invention on peut citer le trichlorure d'aluminium [$AlCl_3$], le dichlorure d'éthylaluminium [$Al(C_2H_5)Cl_2$], le sesquichlorure d'éthylaluminium [$Al_2(C_2H_5)_3Cl_3$] et le chlorure de diéthylaluminium [$Al(C_2H_5)_2Cl$]. On préfère le dichlorure d'éthylaluminium ou le dichlorure d'isobutylaluminium.

A l'issue de l'étape de précipitation du complexe liquide au moyen du composé organoaluminique halogéné, on recueille un complexe catalytique solide constitué d'un précipité homogène (les constituants étant coprécipités à partir d'un complexe liquide) d'un mélange d'un halogénure de magnésium, d'un halogénure du métal de transition et, le cas échéant, de composés partiellement réduits et/ou partiellement halogénés, ainsi que, le cas échéant, du donneur d'électrons. Il s'agit de complexes chimiquement liés, produits de réactions chimiques, et non pas le résultat de mélanges ou de phénomènes d'adsorption. En effet, il est impossible de dissocier l'un ou l'autre des constituants de ces complexes en utilisant des méthodes de séparation purement physiques.

L'étape de précipitation du complexe liquide peut être avantageusement suivie d'un traitement de mûrissage qui a pour fonction de poursuivre la réaction de précipitation et de permettre l'obtention de complexe catalytique solide ayant une résistance améliorée à l'éclatement non contrôlé en polymérisation. Le mûrissage est effectué à une température généralement équivalente ou supérieure à celle à laquelle a lieu la précipitation. Il est effectué pendant une durée non critique allant de 5 minutes à 12 heures en général, de préférence pendant au moins 0,5 heure.

L'étape de précipitation du complexe liquide peut également être suivie, de préférence après l'éventuelle étape de mûrissage, d'une étape de lavage de manière à éliminer les réactifs en excès et les éventuels sous-produits formés au cours de la préparation dont le complexe catalytique solide pourrait encore être imprégné. Pour ce lavage, on peut utiliser n'importe quel diluant inerte et par exemple les alkanes et cycloalkanes comportant jusqu'à 20 atomes de carbone. L'hexane et l'isobutane conviennent bien. Après lavage, le complexe catalytique solide peut être séché, par exemple, par balayage au moyen d'un courant d'un gaz inerte tel que l'azote, de préférence sec.

Le composé organométallique qui sert d'activateur du complexe catalytique solide et appelé couramment "cocatalyseur" peut être choisi parmi les composés organométalliques du lithium, du magnésium, du zinc, de l'aluminium ou de l'étain. Les meilleurs résultats sont obtenus avec les composés organoaluminiques.

On peut utiliser à titre de composé organométallique des composés totalement alkylés dont les chaînes alkyles comprennent jusqu'à 20 atomes de carbone et sont droites ou ramifiées tels que par exemple le n-butyllithium, le diéthylmagnésium, le diéthylzinc, le tétraéthylétain, le tétrabutylétain et les trialkylaluminiums. On peut également utiliser les hydrures d'alkylmétaux dans lesquels les radicaux alkyles comprennent également jusqu'à 20 atomes de carbone tels que l'hydrure de diisobutylaluminium et l'hydrure de triméthylétain. Conviennent également les alkylhalogénures de métaux dans lesquels les radicaux alkyles comprennent aussi jusqu'à 20 atomes de carbone tels que le sesquichlorure d'éthylaluminium, le chlorure de diéthylaluminium et le chlorure de diisobutylaluminium. On peut encore utiliser des composés organoaluminiques obtenus en faisant réagir des trialkylaluminiums ou des hydrures de dialkylaluminium dont les radicaux comprennent jusqu'à 20 atomes de carbone avec des dioléfines comprenant de 4 à 20 atomes de carbone, et plus particulièrement les composés dénommés isoprénylaluminiums.

En général, on donne la préférence aux trialkylaluminiums et en particulier à ceux dont les chaînes alkyles sont droites et comprennent jusqu'à 18 atomes de carbone, plus particulièrement de 2 à 8 atomes de carbone. Le triéthylaluminium et le triisobutylaluminium sont préférés.

La quantité totale de composé organométallique mise en oeuvre dans le procédé de polymérisation de l'invention peut varier dans une large mesure. Elle est en général de 0,02 à 50 mmoles par litre de solvant, de diluant ou de volume de réacteur et de préférence de 0,2 à 2,5 mmoles par 1.

La quantité de complexe catalytique solide mise en oeuvre dans le procédé de polymérisation de l'invention est déterminée en fonction de la teneur en métal de transition dudit complexe. Elle est choisie en général de manière à ce que la concentration soit de 0,001 à 2,5 et de préférence de 0,01 à 0,25 mmole de métal de transition par litre de solvant, de diluant ou de volume de réacteur.

Le rapport molaire de la quantité totale du métal présent dans le composé organométallique à la quantité totale du métal de transition présent dans le composé d'un métal de transition est habituellement d'au moins 1, en particulier d'au moins 5, les valeurs d'au moins 10 étant avantageuses. Le rapport est en général d'au plus 100, de préférence d'au plus 75, les valeurs d'au plus 50 étant recommandées.

Le procédé de polymérisation de l'invention peut être effectué selon tout procédé connu, en solution dans un solvant qui peut être l'oléfine même à l'état liquide, ou en suspension dans un diluant hydrocarboné, ou encore en phase gazeuse. On obtient de bons résultats dans les polymérisations en suspension. Lorsque l'on exécute le procédé de l'invention suivant la troisième variante, la polymérisation est avantageusement réalisée en phase gazeuse.

La polymérisation est réalisée par mise en contact de l'oléfine avec le système catalytique comprenant le complexe catalytique solide, le composé organométallique et le donneur d'électrons.

L'oléfine qui est polymérisée, peut être choisie parmi les oléfines contenant de 2 à 20 atomes de carbone, et de préférence de 2 à 6 atomes de carbone, telles que l'éthylène, le propylène, le butène-1, le 4-méthylpentène-1 et l'hexène-1. L'éthylène, le butène-1 et l'hexène-1 conviennent bien. L'éthylène est particulièrement préféré. On peut bien entendu mettre en oeuvre simultanément plusieurs oléfines différentes afin d'obtenir des copolymères, par exemple des mélanges de deux des oléfines citées ci-dessus ou d'une ou plusieurs de ces oléfines avec une ou plusieurs dioléfines comprenant de 4 à 20 atomes de carbone de préférence. Ces dioléfines peuvent être des dioléfines aliphatiques non conjuguées telles que l'hexadiène-1,4, des dioléfines monocycliques telles que le 4-vinylcyclohexène, le 1,3-divinylcyclohexane, le cyclopentadiène ou le cyclooctadiène-1,5, des dioléfines alicycliques ayant un pont endocyclique telles que le dicyclopentadiène ou le norbornadiène et les dioléfines aliphatiques conjuguées telles que le butadiène et l'isoprène.

Le procédé selon l'invention s'applique à la fabrication d'homopolymères de l'éthylène et de copolymères contenant au moins 90 % molaires de l'éthylène et de préférence 95 % molaires d'éthylène.

La polymérsiation en suspension est généralement effectuée dans un diluant hydrocarboné tel que les hydrocarbures aliphatiques, cycloaliphatiques et aromatiques liquides, à une température telle qu'au moins 80 % (de préférénce au moins 90 %) du polymère formé y soit insoluble. Les diluants préférés sont les alcanes linéaires tels que le n-butane, le n-hexane et le n-heptane ou les alcanes ramifiés tels que l'isobutane, l'isopentane, l'isooctane et le 2,2-diméthylpropane ou les cycloalcanes tels que le cyclopentant et le cyclohexane ou leurs mélanges. On obtient les meilleurs résultats avec l'hexane et l'isobutane. La température de polymérisation est choisie généralement entre 20 et 200 °C, de préférence entre 50 et 150 °C, en particulier entre 65 et 115 °C. La pression partielle de l'oléfine est choisie le plus souvent entre la pression atmosphérique et 5 MPa, de préférence entre 0,2 et 2 MPa, plus particulièrement entre 0,4 et 1,5 MPa.

La polymérisation en phase gazeuse consiste à mettre en contact un courant gazeux comprenant au moins une oléfine avec le système catalytique par exemple dans un lit fluidisé. Dès lors le débit du courant gazeux doit être suffisant pour maintenir la polyoléfine en fluidisation et dépend de la vitesse de formation de celle-ci et de la vitesse à laquelle le système catalytique est consommé. La pression partielle totale de(s) oléfine(s) peut être inférieure ou supérieure à la pression atmosphérique, la pression partielle préférée variant de la pression atmosphérique à environ 7 MPa. En général, une pression de 0,2 à 5 MPa convient bien. Le choix de la température n'est pas critique, celle-ci est en général de 30 à 200 °C. On peut éventuellement utiliser un gaz de dilution, qui doit être inerte vis-à-vis de la polyoléfine.

Le procédé de polymérisation de l'invention peut éventuellement être effectué en présence d'un régulateur du poids moléculaire tel que l'hydrogène.

Le procédé de polymérisation de l'invention peut être effectué en continu ou en discontinu, en un seul réacteur ou dans plusieurs réacteurs disposés en série, les conditions de polymérisation (température, teneur éventuelle en comonomère, teneur éventuelle en hydrogène, type de milieu de polymérisation) dans un réacteur étant différentes de celles utilisées dans les autres réacteurs.

Le procédé de polymérisation de l'invention permet de fabriquer des polyoléfines présentant notamment une teneur faible en oligomères qui les rend aptes à la transformation ultérieure sans formation de fumées en articles façonnés présentant d'excellentes propriétés mécaniques.

Les exemples qui suivent sont destinés à illustrer l'invention. La signification des symboles utilisés dans ces exemples, les unités exprimant les grandeurs mentionnées et les méthodes de mesure de ces grandeurs sont explicitées ci-dessous.

$MI_2$ =  indice de fluidité d'une polyoléfine désignant le débit de la polyoléfine fondue à 190 °C, qui s'écoule au travers d'une filière d'un diamètre de 2 mm et d'une longueur de 8 mm, sous l'action d'un piston lesté d'une masse de 2,16 kg, ce débit étant exprimé en g/10 min, suivant la norme ASTM D 1238 (1990).

$\mu$ = viscosité dynamique d'une polyoléfine exprimée en dPA.s et mesurée à un gradient de vitesse de 100 s$^{-1}$ à 190 °C.

$\alpha$ = activité du complexe catalytique solide exprimée en kg de polyoléfine insoluble obtenus par heure et par gramme de titane mise en oeuvre et par MPa de pression d'oléfine.

MVS = masse volumique standard d'une polyoléfine exprimée en kg/m$^3$ et mesurée selon la norme ISO 1183 (1987).

TO = teneur en oligomères d'une polyoléfine exprimée en grammes d'oligomères par kg de polyoléfine et mesurée par extraction dans de l'hexane bouillant.

$T_{ind}$ = période d'induction du complexe catalytique solide exprimée en minutes et définie comme étant le temps écoulé entre l'introduction de l'oléfine et l'apparition d'une diminution de pression caractéristique du début de la polymérisation.

Dans les exemples, on a préparé des complexes catalytiques solides que l'on a ensuite utilisés pour la polymérisation de l'éthylène. Les exemples 1, 3 et 5 illustrent la première variante de l'invention; les exemples 2, 4 et 6 sont donnés à titre de comparaison. Les exemples 7 et 9 illustrent la deuxième variante de l'invention; les exemples 8 et 10 sont donnés à titre de comparaison. Les exemples 11 et 13 illustrent la troisième variante de l'invention; l'exemple 12 est donné à titre de comparaison.

## Exemple 1 (conforme à l'invention)

Dans cet exemple, on a polymérisé de l'éthylène à l'intervention d'un cocatalyseur et d'un complexe catalytique solide préparé en mettant en oeuvre un donneur d'électrons après la première étape de formation d'un complexe liquide et avant l'étape ultérieure de précipitation dudit complexe liquide, selon la première variante de l'invention décrite plus haut.

### A. Préparation du complexe catalytique solide

#### A. 1. Formation d'un complexe liquide

On a fait réagir pendant 5 heures à 110 °C du diéthylate de magnésium, que l'on a préparé in situ en faisant réagir du magnésium métallique avec de l'éthanol, avec du tétrabutylate de titane en des quantités telles que le rapport molaire de titane au magnésium était égal à 2.

#### A.2. Traitement au moyen d'un donneur d'électrons

On a ajouté, sous agitation, au complexe liquide obtenu en A.1. et dilué dans de l'hexane, du benzoate d'éthyle en une quantité telle que le rapport molaire de benzoate d'éthyle sur titane était égal à 1. Le mélange ainsi obtenu a été maintenu à 35 °C et sous agitation pendant 0,5 heure.

### A.3. Précipitation

On a précipité le complexe traité obtenu en A.2. en mettant celui-ci en contact avec une solution de dichlorure d'isobutylaluminium dans de l'hexane (en une quantité telle que le rapport molaire d'aluminium au titane était égal à 6) sous agitation pendant 2 heures à 45 °C. On a soumis le mélange ainsi obtenu à un mûrissage pendant 45 minutes à 60 °C. Puis, on a recueilli le complexe catalytique solide qui a été lavé dans de l'hexane. Le complexe catalytique solide obtenu comprenait ( % en poids) :

| | |
|---|---|
| Ti | 11,8 |
| Cl | 46,3 |
| Al | 1,6 |
| Mg | 6,0. |

Le solde était constitué d'éléments provenant des produits utilisés pour la fabrication du complexe catalytique solide tels que du carbone, de l'hydrogène et de l'oxygène.

### B. Polymérisation de l'éthylène

On a introduit dans un autoclave de 3 litres, muni d'un agitateur, 1 l d'hexane et 2 mmoles de triéthylaluminium (cocatalyseur). Puis, on a élevé la température à 85 °C, que l'on a maintenue constante durant le temps de polymérisation. On y a ensuite introduit une dose unique d'hydrogène à une pression de 0,4 MPa et de l'éthylène. Puis on y a injecté 2,6 mg du complexe catalytique solide obtenu en A. La pression partielle de l'éthylène a été maintenue constante à une valeur de 0,6 MPa pendant 2 heures. L'autoclave a ensuite été dégazé et refroidi. Le complexe catalytique présentait une activité $\alpha$ de 198. 74 g de polyéthylène ont été recueillis de l'autoclave qui présentaient les caractéristiques suivantes :

| | |
|---|---|
| $MI_2$ = | 5,7 |
| MVS = | 965,8 |
| TO = | 6,3 |
| $\mu$ = | 6700. |

## Exemple 2 (donné à titre de comparaison)

Dans cet exemple on a polymérisé de l'éthylène dans les conditions opératoires de l'exemple 1.B. (et en particulier en présence de la quantité d'hydrogène utilisée dans l'exemple 1.B.) à l'intervention d'un complexe catalytique solide préparé sans donneur d'électrons.

A. Préparation du complexe catalytique solide

Les opérations de l'exemple 1.A. ont été répétées à l'exception de l'étape A.2. qui a été omise. Le complexe catalytique solide obtenu comprenait (% en poids) :

| Ti | 19,5 |
|----|------|
| Cl | 63,2 |
| Al | 2,8 |
| Mg | 5,4. |

Le solde était constitué d'éléments provenant des produits utilisés pour la fabrication du complexe catalytique solide tels que du carbone, de l'hydrogène et de l'oxygène.

B. Polymérisation de l'éthylène

Les opérations de l'exemple 1.B. ont été répétées en injectant 4,4 mg du complexe catalytique solide. Le complexe catalytique présentait une activité $\alpha$ de 72. 75 g de polyéthylène ont été recueillis de l'autoclave qui présentaient les caractéristiques suivantes :

| $MI_2 =$ | 1,4 |
|----------|-----|
| MVS = | 963,7 |
| TO = | 11,0 |
| $\mu =$ | 13900. |

La comparaison des résultats de l'exemple 2 ($MI_2$ = 1,4, ce qui correspond à des masses moléculaires élevées du polyéthylène) avec ceux de l'exemple 1 ($MI_2$ = 5,7, ce qui correspond à des masses moléculaires faibles du polyéthylène) fait apparaître le progrès apporté par l'invention pour ce qui concerne la réponse à l'hydrogène des complexes catalytiques solides et montre en particulier que le complexe catalytique solide de l'exemple 2 est moins sensible à l'hydrogène que le complexe catalytique solide de l'exemple 1.

Exemple 3 (conforme à l'invention)

Dans cet exemple, on a utilisé le complexe catalytique solide de l'exemple 1 fabriqué selon la première variante de l'invention décrite plus haut pour la fabrication d'un copolymère d'éthylène et de butène.

A. Préparation du complexe catalytique solide

Les opérations de l'exemple 1.A. ont été répétées.

B. Copolymérisation de l'éthylène

On a copolymérisé de l'éthylène avec du butène en continu dans un réacteur boucle dans lequel étaient introduits en continu de l'hexane, de l'éthylène (en une quantité telle que la concentration d'éthylène dans l'hexane était égale à 13 g/litre), de l'hydrogène (en une quantité telle que le rapport molaire hydrogène/éthylène était égal à 0,076), du butène (en une quantité telle que le rapport molaire butène/éthylène était égal à 0,057), du triéthylaluminium (en une quantité telle que la concentration exprimée en aluminium dans l'hexane était égale à 25 ppm) et le complexe catalytique solide obtenu dans l'exemple 1.A. La température dans le réacteur était de 80 °C. Le procédé continu était caractérisé par un temps de séjour de 3 h et une production de 30 kg/h. Le polyéthylène recueilli présentait les caractéristiques suivantes :

| $MI_2 =$ | 1,9 |
|----------|-----|
| MVS = | 952,3 |
| TO = | 2,5 |
| $\mu =$ | 13800. |

Exemple 4 (donné à titre de comparaison)

Dans cet exemple on a préparé un copolymère d'éthylène et de butène présentant le $MI_2$ et la MVS du copolymère de l'exemple 3 (en adaptant la concentration de l'hydrogène et du butène dans le procédé de l'exemple 3.B.) en présence d'un complexe catalytique solide sans donneur d'électrons.

A. Préparation du complexe catalytique solide

Les opérations de l'exemple 1.A. ont été répétées à l'exception de l'étape A.2. qui a été omise. Le complexe catalytique solide obtenu comprenait (% en poids) :

| Ti | 19,5 |
|----|------|
| Cl | 63,2 |
| Al | 2,8 |
| Mg | 5,4. |

Le solde était constitué d'éléments provenant des produits utilisés pour la fabrication du complexe catalytique solide tels que du carbone, de l'hydrogène et de l'oxygène.

B. Copolymérisation de l'éthylène

Les opérations de l'exemple 3.B. ont été répétées en utilisant le catalyseur obtenu en A dans les conditions opératoires suivantes :

| rapport molaire hydrogène/éthylène = | 0,094 |
|--------------------------------------|-------|
| rapport molaire butène/éthylène = | 0,051. |

Le polyéthylène recueilli présentait les caractéristi-

ques suivantes :

| | |
|---|---|
| $MI_2 =$ | 1,8 |
| $MVS =$ | 953,7 |
| $TO =$ | 4,5 |
| $\mu =$ | 13700. |

La comparaison des résultats de l'exemple 4 avec ceux de l'exemple 3 fait apparaître le progrès apporté par l'invention pour ce qui concerne la teneur en oligomères des polyoléfines obtenues et montre en particulier que le complexe catalytique solide de l'exemple 4 conduit à une teneur en oligomères plus élevée lorqu'il est utilisé pour la fabrication d'un polyéthylène de $MI_2$ et de MVS donnés.

Exemple 5 (conforme à l'invention)

Dans cet exemple, on a préparé un complexe catalytique solide en mettant en oeuvre un donneur d'électrons après la première étape de formation d'un complexe liquide et avant l'étape ultérieure de précipitation, selon la première variante de l'invention décrite plus haut. Ensuite, on a analysé la granulométrie du complexe catalytique solide.

A. Préparation du complexe catalytique solide

A.1. Formation d'un complexe liquide

On a fait réagir pendant 5 heures à 110 °C du diéthylate de magnésium, que l'on a préparé in situ en faisant réagir du magnésium métallique avec de l'éthanol, avec du tétrabutylate de titane en des quantités telles que le rapport molaire de titane au magnésium était égal à 2.

A.2. Traitement au moyen d'un donneur d'électrons

On a ajouté, sous agitation, au complexe liquide obtenu en A.1. et dilué dans de l'hexane, du benzoate d'éthyle en une quantité telle que le rapport molaire de benzoate d'éthyle sur titane était égal à 1. Le mélange ainsi obtenu a été maintenu à 35 °C et sous agitation pendant 0,5 heure.

A.3. Précipitation

On a précipité le complexe traité obtenu en A.2. en mettant celui-ci en contact avec une solution de dichlorure d'éthylaluminium (en une quantité telle que le rapport molaire d'aluminium au titane était égal à 3,75) sous agitation pendant 1,5 heure à 45 °C. On a soumis le mélange ainsi obtenu à un mûrissage pendant 45 minutes à 60 °C. Puis, on a recueilli le complexe catalytique solide qui a été lavé dans de l'hexane. Le complexe catalytique solide obtenu comprenait (% en poids) :

| | |
|---|---|
| Ti | 14,3 |
| Cl | 32,4 |
| Al | 0,4 |
| Mg | 3,5. |

Le solde était constitué d'éléments provenant des produits utilisés pour la fabrication du complexe catalytique solide tels que du carbone, de l'hydrogène et de l'oxygène.

B. Granulométrie

La granulométrie du complexe catalytique solide obtenu était caractérisée par un diamètre moyen (<d>) de 19 µm et une largeur de la distribution granulométrique $\frac{\sigma}{<d>} = 0.43$ ($\sigma$ représentant l'écart type).

Exemple 6 (donné à titre de comparaison)

Dans cet exemple on a préparé un complexe catalytique solide sans donneur d'électrons dont on a ensuite analysé la granulométrie.

A. Préparation du complexe catalytique solide

Les opérations de l'exemple 5.A. ont été répétées à l'exception de l'étape A.2. qui a été omise. Le complexe catalytique solide obtenu comprenait (% en poids) :

| | |
|---|---|
| Ti | 17,7 |
| Cl | 38,6 |
| Al | 2,1 |
| Mg | 4,4 |

et présentait une granulométrie définie par un diamètre moyen (<d>) de 14 µm et une largeur de la distribution granulométrique $\frac{\sigma}{<d>} = 1,57$.

La comparaison du résultat de l'exemple 6 avec celui de l'exemple 5 fait apparaître le progrès apporté par l'invention pour ce qui concerne la largeur de la distribution granulométrique des complexes catalytiques solides.

Exemple 7 (conforme à l'invention)

Dans cet exemple, on a polymérisé de l'éthylène à l'intervention d'un système catalytique comprenant un complexe catalytique solide préparé en mettant en oeuvre un donneur d'électrons après l'étape de précipitation du complexe liquide et avant de l'introduire dans le milieu de polymérisation, selon la deuxième variante de l'invention décrite plus haut.

## A. Préparation du complexe catalytique solide

### A.1. Formation d'un complexe liquide

On a fait réagir pendant 5 heures à 110 °C du diéthylate de magnésium, que l'on a préparé in situ en faisant réagir du magnésium métallique avec de l'éthanol, avec du tétrabutylate de titane en des quantités telles que le rapport molaire de titane au magnésium était égal à 2.

### A.2. Précipitation

On a précipité le complexe liquide obtenu en A.1. en mettant celui-ci en contact avec une solution de dichlorure d'isobutylaluminium (en une quantité telle que le rapport molaire d'aluminium au titane était égal à 6) sous agitation pendant 2 heures à 45 °C. On a soumis le mélange ainsi obtenu à un mûrissage pendant 45 minutes à 60 °C. Puis, on a recueilli le complexe catalytique solide qui a été lavé dans de l'hexane.

### A.3. Traitement au moyen d'un donneur d'électrons

On a ajouté, sous agitation, à une suspension du complexe catalytique solide obtenu en A.2. dans de l'hexane, du benzoate d'éthyle en une quantité telle que le rapport molaire de benzoate d'éthyle sur titane était égal à 10. Le mélange ainsi obtenu a été maintenu à 30 °C et sous agitation pendant 1 heure. Le solide ainsi traité a été lavé dans de l'hexane. Le complexe catalytique solide obtenu comprenait (% en poids) :

| Ti | 16,6 |
|----|------|
| Cl | 59,1 |
| Al | 2,5 |
| Mg | 4,8. |

Le solde était constitué d'éléments provenant des produits utilisés pour la fabrication du complexe catalytique solide tels que du carbone, de l'hydrogène et de l'oxygène.

### B. Polymérisation de l'éthylène

On a introduit dans un autoclave de 3 litres, muni d'un agitateur, 1 l d'hexane et 2 mmoles de triéthylaluminium. Puis, on a élevé la température à 85 °C, que l'on a maintenue constante durant le temps de polymérisation. On y a ensuite introduit une dose unique d'hydrogène à une pression de 0,4 MPa et de l'éthylène. Puis on y a injecté 10,2 mg du complexe catalytique solide obtenu en A. La pression partielle de l'éthylène a été maintenue constante à une valeur de 0,6 MPa pendant 2 heures. L'autoclave a ensuite été dégazé et refroidi. Le complexe catalytique présentait une activité $\alpha$ de 69. 145 g de polyéthylène ont été recueillis de l'autoclave qui présentaient les caractéristiques suivantes :

| $MI_2$ = | 2,7 |
|----------|-----|
| MVS = | 964,1 |
| TO = | 11,9. |

### Exemple 8 (donné à titre de comparaison)

Dans cet exemple on a fabriqué un polyéthylène présentant De $MI_2$ et la MVS du polyéthylène de l'exemple 7 à l'intervention d'un complexe catalytique solide préparé sans donneur d'électrons.

### A. Préparation du complexe catalytique solide

Les opérations de l'exemple 7.A. ont été répétées à l'exception de l'étape A.3. qui a été omise. Le complexe catalytique solide obtenu comprenait (% en poids) :

| Ti | 17,0 |
|----|------|
| Cl | 61,2 |
| Al | 2,7 |
| Mg | 4,6. |

Le solde était constitué d'éléments provenant des produits utilisés pour la fabrication du complexe catalytique solide tels que du carbone, de l'hydrogène et de l'oxygène.

### B. Polymérisation de l'éthylène

Les opérations de l'exemple 7.B. ont été répétées en injectant 7,9 mg du complexe catalytique solide. Le complexe catalytique présentait une activité $\alpha$ de 79. 128 g de polyéthylène ont été recueillis de l'autoclave qui présentait les caractéristiques suivantes :

| $MI_2$ = | 2,9 |
|----------|-----|
| MVS = | 964,2 |
| TO = | 18,2. |

La comparaison des résultats de l'exemple 8 avec ceux de l'exemple 7 fait apparaître le progrès apporté par l'invention pour ce qui concerne la teneur en oligomères des polyéthylènes obtenus et montre en particulier que le complexe catalytique solide de l'exemple 8 conduit à une teneur en oligomères plus élevée lorsqu'il est utilisé pour la fabrication d'un polyéthylène de $MI_2$ et de MVS donnés.

### Exemple 9 (conforme à l'invention)

Dans cet exemple on a polymérisé de l'éthylène à l'intervention d'un complexe catalytique solide contenant deux métaux de transition différents préparé selon la deuxième variante de l'invention décrite plus haut.

## A. Préparation du complexe catalytique solide

### A.1. Formation d'un complexe liquide

On a fait réagir pendant 7 heures à 140 °C du diéthylate de magnésium avec du tétrabutylate de titane et du tétrabutylate de zirconium en des quantités telles que le rapport molaire de titane au magnésium était égal à 0,6 et que le rapport molaire de zirconium au titane était égal à 2.

### A.2. Précipitation

On a précipité le complexe liquide obtenu en A.1. en mettant celui-ci en contact avec une solution de dichlorure d'isobutylaluminium (en une quantité telle que le rapport molaire d'aluminium à la quantité totale mise en oeuvre de titane et de zirconium était égal à 7,8) sous agitation pendant 120 minutes à 45 °C. On a soumis le mélange ainsi obtenu à un mûrissage pendant 90 minutes à 60 °C. Puis, on a recueilli le complexe catalytique solide qui a été lavé dans de l'hexane.

### A.3. Traitement au moyen d'un donneur d'électrons

On a ajouté, sous agitation, à une suspension du complexe catalytique solide obtenu en A.2. dans de l'hexane, du benzoate d'éthyle en une quantité telle que le rapport molaire de benzoate d'éthyle sur la quantité totale mise en oeuvre de titane et de zirconium était égal à 4,2. Le mélange ainsi obtenu a été maintenu à 35 °C et sous agitation pendant 1 heure. Le solide ainsi traité a été lavé dans de l'hexane. Le complexe catalytique solide obtenu comprenait (% en poids) :

| | |
|---|---|
| Ti | 3 |
| Zr | 8,1 |
| Cl | 25,5 |
| Al | 0,5 |
| Mg | 2,5. |

Le solde était constitué d'éléments provenant des produits utilisés pour la fabrication du complexe catalytique solide tels que du carbone, de l'hydrogène et de l'oxygène.

### B. Polymérisation de l'éthylène

On a introduit dans un autoclave de 3 litres, muni d'un agitateur, 1 l d'hexane et 2 mmoles de triisobutylaluminium. Puis, on a élevé la température à 85 °C, que l'on a maintenue constante durant le temps de polymérisation. On y a ensuite introduit une dose unique d'hydrogène à une pression de 0,9 MPa et de l'éthylène. Puis on y a injecté 45 mg du complexe catalytique solide obtenu en A. La pression partielle de l'éthylène a été maintenue constante à une valeur de 0,6 MPa pendant 2 heures. L'autoclave a ensuite été dégazé et refroidi. Le complexe catalytique présentait une activité $\alpha$ de 144. 234 g de polyéthylène ont été recueillis de l'autoclave qui présentaient les caractéristiques suivantes :

| | |
|---|---|
| $MI_2$ = | 22 |
| MVS = | 967,4 |
| TO = | 32. |

### Exemple 10 (donné à titre de comparaison)

Dans cet exemple on a polymérisé de l'éthylène dans les conditions de l'exemple 9.B. à l'intervention d'un complexe catalytique solide comprenant deux métaux de transition différents préparé sans donneur d'électrons.

### A. Préparation du complexe catalytique solide

Les opérations de l'exemple 9.A. ont été répétées à l'exception de l'étape A.3. qui a été omise. Le complexe catalytique solide obtenu comprenait (% en poids) :

| | |
|---|---|
| Ti | 5,3 |
| Zr | 8,1 |
| Cl | 51,3 |
| Al | 1,7 |
| Mg | 4,1. |

Le solde était constitué d'éléments provenant des produits utilisés pour la fabrication du complexe catalytique solide tels que du carbone, de l'hydrogène et de l'oxygène.

### B. Polymérisation de l'éthylène

Les opérations de l'exemple 9.B. ont été répétées en injectant 51 mg du complexe catalytique solide. Le complexe catalytique présentait une activité $\alpha$ de 113. 365 g de polyéthylène ont été recueillis de l'autoclave qui présentaient les caractéristiques suivantes :

| | |
|---|---|
| $MI_2$ = | 0,1 |
| MVS = | 960,2 |
| TO = | 33. |

La comparaison des résultats de l'exemple 10 ($MI_2$ = 0,1, ce qui correspond à des masses moléculaires élevées du polyéthylène) avec ceux de l'exemple 9 ($MI_2$ = 22, ce qui correspond à des masses moléculaires faibles du polyéthylène) fait apparaître le progrès apporté par l'invention pour ce qui concerne la réponse à l'hydrogène des complexes catalytiques solides et montre en particulier que le complexe catalytique solide de l'exemple 10 est nettement moins sensible à l'hydrogène que le complexe catalytique solide de l'exemple 9.

Exemple 11 (conforme à l'invention)

Dans cet exemple on a polymérisé de l'éthylène en présence d'un complexe catalytique solide exempt d'un donneur d'électrons et d'un mélange d'un donneur d'électrons avec un composé organométallique, selon la forme d'exécution particulièrement avantageuse de la troisième variante de l'invention décrite plus haut.

A. Préparation du complexe catalytique solide

A.1. Formation d'un complexe liquide

On a fait réagir pendant 5 heures à 110 °C du diéthylate de magnésium, que l'on a préparé in situ en faisant réagir du magnésium métallique avec de l'éthanol, avec du tétrabutylate de titane en des quantités telles que le rapport molaire de titane au magnésium était égal à 2.

A.2. Précipitation

On a précipité le complexe liquide obtenu en A.1. en mettant celui-ci en contact avec une solution de dichlorure d'isobutylaluminium (en une quantité telle que le rapport molaire d'aluminium au titane était égal à 6) sous agitation pendant 2 heures à 45 °C. On a soumis le mélange ainsi obtenu à un mûrissage pendant 45 minutes à 60 °C. Puis, on a recueilli le complexe catalytique solide qui a été lavé plusieurs fois dans de l'hexane. Le complexe catalytique solide obtenu, comprenait (% en poids) :

| Ti | 19,5 |
|----|------|
| Cl | 63,2 |
| Al | 2,8 |
| Mg | 5,4. |

Le solde était constitué d'éléments provenant des produits utilisés pour la fabrication du complexe catalytique solide tels que du carbone, de l'hydrogène et de l'oxygène.

B. Mélange du donneur d'électrons et du composé organométallique

On a mélangé à température ambiante pendant quelques minutes une solution de triéthylaluminium dans de l'hexane et du benzoate d'éthyle dans un rapport molaire benzoate/triéthylaluminium de 0,25.

C. Polymérisation de l'éthylène

On a introduit dans un autoclave de 3 litres, muni d'un agitateur, 1 l d'hexane et une quantité du mélange obtenu en B contenant 2 mmoles de triéthylaluminium. Puis, on a élevé la température à 85 °C, que l'on a maintenue constante durant le temps de polymérisation. On y a ensuite introduit une dose unique d'hydrogène à une pression de 0,4 MPa et de l'éthylène. Puis on y a injecté 7,1 mg du complexe catalytique solide obtenu en A. La pression partielle de l'éthylène a été maintenue constante à une valeur de 0,6 MPa pendant 2 heures. L'autoclave a ensuite été dégazé et refroidi. Le complexe ca-talytique présentait une activité $\alpha$ de 124. 208 g de polyéthylène ont été recueillis de l'autoclave qui présen-taient les caractéristiques suivantes :

| $MI_2$ = | 3,4 |
|----------|--------|
| MVS = | 962,8 |
| TO = | 16,9 |
| $\mu$ = | 8500. |

Exemple 12 (donné à titre de comparaison)

Dans cet exemple on a polymérisé de l'éthylène dans les conditions de l'exemple 11.B. en présence d'un complexe catalytique solide et d'un cocatalyseur et en l'absence d'un donneur d'électrons.

A. Préparation du complexe catalytique solide

On a répété les opérations de l'exemple 11.A.

B. Polymérisation de l'éthylène

On a répété les opérations de l'exemple 11.C. en introduisant 2 mmoles de triéthylaluminium dans l'autoclave au lieu du mélange benzoate-triéthylaluminium et en injectant 6,0 mg du complexe catalytique solide.

Le complexe catalytique présentait une activité $\alpha$ de 64 et une période d'induction $T_{ind}$ de 0 minutes. 90 g de polyéthylène ont été recueillis de l'autoclave qui présentaient les caractéristiques suivantes :

| $MI_2$ = | 1,9 |
|----------|---------|
| MVS = | 964,1 |
| TO = | 18,9 |
| $\mu$ = | 11500. |

La comparaison des résultats de l'exemple 12 avec ceux de l'exemple 11 fait apparaître le progrès apporté par l'invention pour ce qui concerne l'activité catalytique des complexes catalytiques solides.

Exemple 13 (conforme à l'invention)

Dans cet exemple on a polymérisé de l'éthylène en présence d'un complexe catalytique solide exempt d'un donneur d'électrons et d'un mélange d'un donneur d'électrons avec un composé organométallique, selon la forme d'exécution particulièrement avantageuse de la troisième variante de l'invention décrite plus haut.

## A. Préparation du complexe catalytique solide

On a répété les opérations de l'exemple 11.A.

## B. Mélange du donneur d'électrons et du composé organométallique

On a mélangé à température ambiante pendant quelques minutes une solution de triéthylaluminium dans de l'hexane et du benzoate d'éthyle dans un rapport molaire benzoate/triéthylaluminium de 0,294.

## C. Polymérisation de l'éthylène

On a introduit dans un autoclave de 3 litres, muni d'un agitateur, 1 l d'hexane et une quantité du mélange obtenu en B contenant 2 mmoles de triéthylaluminium. Puis, on a élevé la température à 85 °C, que l'on a maintenue constante durant le temps de polymérisation. On y a ensuite introduit une dose unique d'hydrogène à une pression de 0,4 MPa et de l'éthylène. Puis on y a injecté 4,9 mg du complexe catalytique solide obtenu en A. La pression partielle de l'éthylène a été maintenue constante à une valeur de 0,6 MPa pendant 4 heures. L'autoclave a ensuite été dégazé et refroidi. Le complexe catalytique présentait une activité $\alpha$ de 33 et une période d'induction $T_{ind}$ de 120 minutes. 76 g de polyéthylène ont été recueillis de l'autoclave qui présentaient les caractéristiques suivantes :

| | |
|---|---|
| $MI_2 =$ | 0,95 |
| $MVS =$ | 961,6 |
| $TO =$ | 17,2 |
| $\mu =$ | 15900. |

La comparaison des résultats de l'exemple 13 avec ceux de l'exemple 12 fait apparaître le changement apporté par l'invention pour ce qui concerne la période d'induction des complexes catalytiques solides.

## Exemple 14 (conforme à l'invention)

Dans cet exemple, on a polymérisé de l'éthylène à l'intervention d'un cocatalyseur et d'un complexe catalytique solide préparé en mettant en oeuvre un donneur d'électrons après la première étape de formation d'un complexe liquide et avant l'étape ultérieure de précipitation dudit complexe liquide, selon la première variante de l'invention décrite plus haut.

## A. Préparation du complexe catalytique solide

### A.1. Formation d'un complexe liquide

On a fait réagir pendant 5 heures à 110 °C du diéthylate de magnésium, que l'on a préparé in situ en faisant réagir du magnésium métallique avec de l'éthanol, avec du tétrabutylate de titane en des quantités telles que le rapport molaire de titane au magnésium était égal à 1.

### A.2. Traitement au moyen d'un donneur d'électrons

On a ajouté, sous agitation, au complexe liquide obtenu en A.1. et dilué dans de l'hexane, du benzoate d'éthyle en une quantité telle que le rapport molaire de benzoate d'éthyle sur magnésium dans le complexe catalytique solide final était égal à 0,1. Le mélange ainsi obtenu a été maintenu à 35 °C et sous agitation pendant 0,5 heure.

### A.3. Précipitation

On a précipité le complexe traité obtenu en A.2. en mettant celui-ci en contact avec une solution de dichlorure d'isobutylaluminium dans de l'hexane (en une quantité telle que le rapport molaire d'aluminium au titane était égal à 7) sous agitation pendant 1,5 heure à 45 °C. On a soumis le mélange ainsi obtenu à un mûrissage pendant 45 minutes à 60 °C. Puis, on a recueilli le complexe catalytique solide qui a été lavé dans de l'hexane. Le complexe catalytique solide obtenu comprenait (% en poids) :

| | |
|---|---|
| Ti | 12,4 |
| Cl | 53,7 |
| Al | 3,8 |
| Mg | 7,7. |

Le solde était constitué d'éléments provenant des produits utilisés pour la fabrication du complexe catalytique solide tels que du carbone, de l'hydrogène et de l'oxygène. La granulométrie du complexe catalytique solide était caractérisée par un diamètre moyen (<d>) de 9 μm.

## B. Polymérisation de l'éthylène

On a introduit dans un autoclave de 3 litres, muni d'un agitateur, 1 l d'hexane et 2 mmoles de triéthylaluminium (cocatalyseur). Puis, on a élevé la température à 85 °C, que l'on a maintenue constante durant le temps de polymérisation. On y a ensuite introduit une dose unique d'hydrogène à une pression de 0,2 MPa et de l'éthylène. Puis on y a injecté 7,8 mg du complexe catalytique solide obtenu en A. La pression partielle de l'éthylène a été maintenue constante à une valeur de 0,6 MPa pendant 2 heures. L'autoclave a ensuite été dégazé et refroidi. 263 g de polyéthylène ont été recueillis de l'autoclave qui présentaient les caractéristiques suivantes :

| | |
|---|---|
| $MI_2 =$ | 0,47 |
| $MVS =$ | 959,0 |

(suite)

| PSA = | 318 |
|---|---|
| μ = | 23000. |

## Exemple 15 (donné à titre de comparaison)

Dans cet exemple on a polymérisé de l'éthylène dans les conditions opératoires de l'exemple 14.B. à l'intervention d'un complexe catalytique solide préparé en mettant en oeuvre le donneur d'électrons pendant la première étape de formation d'un complexe liquide.

### A. Préparation du complexe catalytique solide

#### A.1. Formation d'un complexe liquide

On a fait réagir pendant 4 heures à 140 °C du diéthylate de magnésium, avec du tétrabutylate de titane en des quantités telles que le rapport molaire de titane au magnésium était égal à 1 et avec du benzoate d'éthyle en une quantité telle que le rapport molaire de benzoate d'éthyle sur magnésium dans le complexe catalytique solide final était égal à 0,1.

#### A.2. Précipitation

On a précipité le complexe obtenu en A.1. en mettant celui-ci en contact avec une solution de dichlorure d'isobutylaluminium dans de l'hexane (en une quantité telle que le rapport molaire d'aluminium au titane était égal à 7) sous agitation pendant 1,5 heure à 45 °C. On a soumis le mélange ainsi obtenu à un mûrissage pendant 45 minutes à 60 °C. Puis, on a recueilli le complexe catalytique solide qui a été lavé dans de l'hexane. Le complexe catalytique solide obtenu comprenait (% en poids) :

| Ti | 12,0 |
|---|---|
| Cl | 55,8 |
| Al | 3,4 |
| Mg | 8,3. |

Le solde était constitué d'éléments provenant des produits utilisés pour la fabrication du complexe catalytique solide tels que du carbone, de l'hydrogène et de l'oxygène. La granulométrie du complexe catalytique solide était caractérisée par un diamètre moyen (<d>) de 38 μm.

### B. Polymérisation de l'éthylène

On a répété les opérations de l'exemple 14.B. à l'exception de la quantité de complexe catalytique solide mise en oeuvre qui était de 4,2 mg. 168 g de polyéthylène ont été recueillis de l'autoclave qui présentaient les caractéristiques suivantes :

| MI$_2$ = | 0,57 |
|---|---|
| MVS = | 959,3 |
| PSA = | 222 |
| μ = | 21400. |

La comparaison des résultats de l'exemple 15 avec ceux de l'exemple 14 fait apparaître le progrès apporté par l'invention pour ce qui concerne le poids spécifique apparent des polymères obtenus.

## Revendications

1. Procédé de fabrication de polymères d'éthylène contenant au moins 90 % molaires d'éthylène selon lequel on met en contact l'éthylène et éventuellement une autre oléfine avec un système catalytique comprenant :

   a) un complexe catalytique solide à base de magnésium, de métal de transition et d'halogène, ledit complexe catalytique solide étant préparé en faisant réagir, dans une première étape, au moins un composé de magnésium choisi parmi les composés oxygénés organiques et les composés halogénés du magnésium avec au moins un composé d'un métal de transition du groupe IVB ou VB du tableau périodique choisi parmi les composés oxygénés organiques et les composés halogénés d'un métal de transition en l'absence d'un donneur d'électrons, jusqu'à l'obtention d'un complexe liquide, et, dans une étape ultérieure, en précipitant ledit complexe liquide au moyen d'un composé organoaluminique halogéné de formule générale AlR$_n$X$_{3-n}$ dans laquelle R est un radical hydrocarboné, X est un halogène et n est inférieur à 3, pour recueillir un complexe catalytique solide, et
   b) un composé organométallique d'un métal des groupes IA, IIA, IIB, IIIA et IVA du tableau périodique,

   caractérisé en ce que le système catalytique comprend en outre :

   c) au moins un donneur d'électrons choisi parmi les composés organiques contenant un ou plusieurs atomes ou un ou plusieurs groupements d'atomes ayant une ou plusieurs paires d'électrons libres à l'exception des alcools, phénols, silanes et polysiloxanes, ledit donneur d'électrons étant mis en oeuvre après la première étape de la préparation du complexe catalytique solide conduisant à l'obtention d'un complexe liquide.

**2.** Procédé selon la revendication 1, caractérisé en ce que le donneur d'électrons est mis en oeuvre pendant la préparation du complexe catalytique solide immédiatement après la première étape de la préparation du complexe catalytique solide et avant l'étape ultérieure de précipitation.

**3.** Procédé selon la revendication 1, caractérisé en ce que le donneur d'électrons est mis en oeuvre pendant la préparation du complexe catalytique solide après l'étape de précipitation du complexe liquide et avant de mettre le complexe catalytique solide en contact avec l'oléfine.

**4.** Procédé selon la revendication 2 ou 3, caractérisé en ce que le donneur d'électrons est mis en oeuvre en une quantité de 0,01 à 50 moles par mole de quantité totale mise en oeuvre de métal de transition.

**5.** Procédé selon la revendication 1, caractérisé en ce que le donneur d'électrons est mis en oeuvre pendant la polymérisation.

**6.** Procédé selon la revendication 5, caractérisé en ce que le donneur d'électrons est introduit dans le milieu de polymérisation mélangé avec le composé organométallique.

**7.** Procédé selon la revendication 5 ou 6, caractérisé en ce que le donneur d'électrons est mis en oeuvre en une quantité telle que le rapport molaire de la quantité mise en oeuvre du composé organométallique à la quantité mise en oeuvre du donneur d'électrons soit de 0,01 à 100.

**8.** Procédé selon l'une quelconque des revendications 1 à 7, caractérisé en ce que le complexe catalytique solide n'est pas prépolymérisé.

**9.** Procédé selon l'une quelconque des revendications 1 à 8, caractérisé en ce que le donneur d'électrons est choisi parmi les esters d'acides organiques.

**10.** Procédé selon la revendication 9, caractérisé en ce que le donneur d'électrons est le benzoate d'éthyle.

**11.** Procédé selon l'une quelconque des revendications 1 à 10, caractérisé en ce que le composé de magnésium est choisi parmi les dialkoxydes de magnésium.

**12.** Procédé selon l'une quelconque des revendications 1 à 11, caractérisé en ce que le composé d'un métal de transition est choisi parmi les tétraalkoxydes de titane.

**13.** Procédé selon l'une quelconque des revendications 1 à 12, caractérisé en ce que le composé organoaluminique halogéné est choisi parmi le dichlorure d'éthylaluminium et le dichlorure d'isobutylaluminium.

**14.** Procédé selon l'une quelconque des revendications 1 à 13, caractérisé en ce que le composé organométallique est choisi parmi le triéthylaluminium et le triisobutylaluminium.

**Patentansprüche**

**1.** Verfahren zur Herstellung von Ethylenpolymeren, die wenigstens 90 Mol-% Ethylen enthalten, gemäß dem man Ethylen und gegebenenfalls ein anderes Olefin mit einem katalytischen System in Kontakt bringt, das umfaßt:

a) einen festen katalytischen Komplex auf der Basis von Magnesium, Übergangsmetall und Halogen, wobei besagter fester katalytischer Komplex hergestellt wird, indem man in einem ersten Schritt wenigstens eine Magnesiumverbindung, die unter den organischen sauerstoffhaltigen Verbindungen und den halogenhaltigen Verbindungen des Magnesiums ausgewählt ist, mit wenigstens einer Verbindung eines Übergangsmetalls der Gruppe IVB oder VB des Periodensystems, die unter den organischen sauerstoffhaltigen Verbindungen und den halogenhaltigen Verbindungen eines Übergangsmetalls ausgewählt ist, in Abwesenheit eines Elektronendonors bis zum Erhalt eines flüssigen Komplexes umsetzt, und indem man in einem späteren Schritt besagten flüssigen Komplex mit Hilfe einer halogenhaltigen aluminiumorganischen Verbindung der allgemeinen Formel $AlR_nX_{3-n}$, in der R ein Kohlenwasserstoffrest ist, X ein Halogen ist und n kleiner als 3 ist, ausfällt, um einen festen katalytischen Komplex zu gewinnen, und
b) eine metallorganische Verbindung eines Metalls der Gruppen IA, IIA, IIB, IIIA und IVA des Periodensystems,

dadurch gekennzeichnet, daß das katalytische System außerdem umfaßt:

c) wenigstens einen Elektronendonor, der unter den organischen Verbindungen ausgewählt ist, die ein oder mehrere Atome oder eine oder mehrere Gruppen von Atomen mit einem oder mehreren freien Elektronenpaaren enthalten, mit Ausnahme der Alkohole, Phenole, Silane und Polysiloxane, wobei besagter Elektronendonor nach dem ersten Schritt der Herstellung des festen katalytischen Komplexes, der zum Erhalt eines flüssigen Komplexes führt, verwendet wird.

2. Verfahren gemäß Anspruch 1, dadurch gekennzeichnet, daß der Elektronendonor während der Herstellung des festen katalytischen Komplexes sofort nach dem ersten Schritt der Herstellung des festen katalytischen Komplexes und vor dem späteren Schritt der Ausfällung verwendet wird.

3. Verfahren gemäß Anspruch 1, dadurch gekennzeichnet, daß der Elektronendonor während der Herstellung des festen katalytischen Komplexes nach dem Schritt der Ausfällung des flüssigen Komplexes und vor dem Inkontaktbringen des festen katalytischen Komplexes mit dem Olefin verwendet wird.

4. Verfahren gemäß Anspruch 2 oder 3, dadurch gekennzeichnet, daß der Elektronendonor in einer Menge von 0,01 bis 50 Mol pro Mol verwendeter Gesamtmenge an Übergangsmetall verwendet wird.

5. Verfahren gemäß Anspruch 1, dadurch gekennzeichnet, daß der Elektronendonor während der Polymerisation verwendet wird.

6. Verfahren gemäß Anspruch 5, dadurch gekennzeichnet, daß der Elektronendonor gemischt mit der metallorganischen Verbindung in das Polymerisationsmedium eingeführt wird.

7. Verfahren gemäß Anspruch 5 oder 6, dadurch gekennzeichnet, daß der Elektronendonor in einer solchen Menge verwendet wird, daß das Molverhältnis der verwendeten Menge der metallorganischen Verbindung zu der verwendeten Menge des Elektronendonors 0,01 bis 100 ist.

8. Verfahren gemäß einem der Ansprüche 1 bis 7, dadurch gekennzeichnet, daß der feste katalytische Komplex nicht vorpolymerisiert ist.

9. Verfahren gemäß einem der Ansprüche 1 bis 8, dadurch gekennzeichnet, daß der Elektronendonor unter den Estern organischer Säuren ausgewählt ist.

10. Verfahren gemäß Anspruch 9, dadurch gekennzeichnet, daß der Elektronendonor Ethylbenzoat ist.

11. Verfahren gemäß einem der Ansprüche 1 bis 10, dadurch gekennzeichnet, daß die Magnesiumverbindung unter den Magnesiumdialkoxiden ausgewählt ist.

12. Verfahren gemäß einem der Ansprüche 1 bis 11, dadurch gekennzeichnet, daß die Verbindung eines Übergangsmetalls unter den Titantetraalkoxiden ausgewählt ist.

13. Verfahren gemäß einem der Ansprüche 1 bis 12, dadurch gekennzeichnet, daß die halogenhaltige aluminiumorganische Verbindung unter Ethylaluminiumdichlorid und Isobutylaluminiumdichlorid ausgewählt ist.

14. Verfahren gemäß einem der Ansprüche 1 bis 13, dadurch gekennzeichnet, daß die metallorganische Verbindung unter Triethylaluminium und Triisobutylaluminium ausgewählt ist.

## Claims

1. Process for the preparation of ethylene polymers containing at least 90 mol % of ethylene, according to which ethylene and optionally another olefin is placed in contact with a catalytic system comprising :

a) a solid catalytic complex based on magnesium, on transition metal and on halogen, the said catalytic complex being prepared by reacting, in a first step, at least one magnesium compound chosen from oxygen-containing organomagnesium compounds and halogen-containing magnesium compounds with at least one compound of a transition metal from group IVB or VB of the Periodic Table chosen from oxygen-containing organic compounds and halogen-containing compounds of a transition metal, in the absence of an electron donor until a liquid complex is obtained, and, in a subsequent step, by precipitating the said liquid complex using a halogen-containing organoaluminium compound of general formula $AlRnX_{3-n}$ in which R is a hydrocarbon radical, X is a halogen and n is less than 3, in order to collect a solid catalytic complex, and

b) an organometallic compound of a metal from groups IA, IIA, IIB, IIIA and IVA of the Periodic Table,

characterized in that the catalytic system also comprises :

c) at least one electron donor chosen from organic compounds containing one or more atoms or one or more groups of atoms having one or more pairs of free electrons, with the exception of alcohols, phenols, silanes and polysiloxanes, said electron donor being used after the first step in the preparation of the solid catalytic complex leading to the production of a liquid complex.

2. Process according to Claim 1, characterized in that the electron donor is used during the preparation of the solid catalytic complex immediately after the first step for the preparation of the solid catalytic complex and before the subsequent precipitation step.

3. Process according to Claim 1, characterized in that the electron donor is used during the preparation of the solid catalytic complex after the step for precipitation of the liquid complex and before placing the solid catalytic complex in contact with the olefin.

4. Process according to Claim 2 or 3, characterized in that the electron donor is used in an amount from 0.01 to 50 mol per mole of total amount of transition metal used.

5. Process according to Claim 1, characterized in that the electron donor is used during the polymerization.

6. Process according to Claim 5, characterized in that the electron donor is introduced into the polymerization medium mixed with the organometallic compound.

7. Process according to Claim 5 or 6, characterized in that the electron donor is used in an amount such that the molar ratio of the amount of organometallic compound used to the amount of electron donor used is from 0.01 to 100.

8. Process according to any one of Claims 1 to 7, characterized in that the solid catalytic complex is not prepolymerized.

9. Process according to any one of Claims 1 to 8, characterized in that the electron donor is chosen from organic acid esters.

10. Process according to Claim 9, characterized in that the electron donor is ethyl benzoate.

11. Process according to any one of Claims 1 to 10, characterized in that the magnesium compound is chosen from magnesium dialkoxides.

12. Process according to any one of Claims 1 to 11, characterized in that the transition metal compound is chosen from titanium tetraalkoxides.

13. Process according to any one of Claims 1 to 12, characterized in that the halogen-containing organoaluminium compound is chosen from ethylaluminium dichloride and isobutylaluminium dichloride.

14. Process according to any one of Claims 1 to 13, characterized in that the organometallic compound is chosen from triethylaluminium and triisobutylaluminium.